# EUROPEAN PATENT APPLICATION

(11) **EP 2 659 777 A1**
(43) Date of publication of application: **06.11.2013**
(21) Application number: 12166803.2
(22) Date of filing: 04.05.2012
(51) Int. Cl.: A01N 47/34

(54) **New use of a pesticide**

(71) Applicant: Syngenta Participations AG, 4058 Basel (CH)
(72) Inventor: The designation of the inventor has not yet been filed
(74) Representative: Jantschy, Jasmin

(57) **Abstract**

A method of combating or controlling adult insects of the genus of *Diabrotica* on crop plants with a specific benzoylurea compound.

## Description

### Field of the invention

The invention pertains to a new insecticidal use of novaluron. In particular to a method of combating or controlling insects of the *Diabrotica* genus on various crop plants and to a method of protecting crop plants from *Diabrotica.*

### Background of the invention

Insect growth regulators (IGR) are substances that interrupt and/or inhibit the life cycle of insect pests. Examples include juvenile hormone mimics, ecdysone agonists and chitin synthesis inhibitors (CSIs). As an insect grows, it undergoes a process called molting, where it grows a new exoskeleton under its old one and then sheds to allow the new one to swell to a new size and harden. IGRs prevent an insect from reaching maturity by interfering with the molting process. This in turn curbs infestations since the immature insects are unable reproduce. Because IGRs work by interfering with an insect's molting process, they take longer to kill than traditional insecticides which have immediate or fast acting knock-down effects. IGRs may perhaps take 3 to 10 days depending on the product, the life stage of the insect when the product is applied and how quickly the insect generally develops. Some IGRs cause insects to stop feeding long before they die.

In particular, the chitin synthesis inhibitors CSIs are defined as compounds that are capable of inhibiting the formation of chitin, a carbohydrate needed to form the insect's exoskeleton during the development of insects. Insects exposed to CSIs are unable to form a normal cuticle because the ability to synthesize chitin is inhibited. In the absence of chitin, the cuticle becomes thin and fragile, and is unable to support the insect or to withstand the rigors of molting, causing the insect to die. Chitin synthesis inhibitors can also kill eggs by disrupting normal embryonic development.

One particular CSI is commercially available novaluron, a benzoylurea having the chemical formula of (+)-I-[3-chloro-4- (1,1, 2-trifluoro-2-trifluoromethoxyethoxy) phenyl] - 3- (2, 6-difluorobenzoyl) urea, depicted in Formula I below.

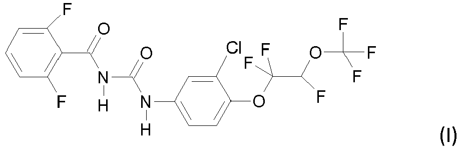

The preparation of Novaluron and insecticidal properties thereof are disclosed in U.S. Patent Nos. 4, 607, 044, 4, 833, 151, 4, 980, 376 and 5, 142, 064 and specifically in European patent No. 271,923.

Novaluron acts mainly by ingestion and contact. At the level of the whole organism, novaluron disrupts post-apolytic cuticle formation, resulting in thinning of the pharate and the subsequent cuticle. This disruption of new cuticle formation leads to failed ecdysis during the molting process. Also during egg hatch, studies show that without proper chitin development, larvae cannot break the egg shells, so they are either unable to hatch or die soon after hatching. Thus, novaluron is known as an active ovicide and larvicide.

Because of these known modes of action, novaluron is generally applied either at the time of ovipositing, at egg hatch, or more preferably during first or second instar larval stages. Novaluron being a CSI has no direct lethal effect on adult insects, so novaluron is generally not applied when insects have already reached adulthood. This is reflected in current labels on commercially available Novaluron (see labels for Rimon^{®} or Diamond^{®}) on various crops.

However, growers are often reluctant to leave adults uncontrolled; thus, they choose to either use different, broader-spectrum chemicals than CSI's or supplement a CSI (like novaluron) with additional applications of traditional insecticidal compounds.

Thus finding a new use of novaluron to provide a long-term effect on *Diabrotica populations* following ingestion by adults and reduction of egg hatch will greatly reduce survival of the pest and also the amount of insecticides applied to a field overall. Publications wherein novaluron application on adult insects showed sub-lethal activity (decreased egg viability) are known, as it is known for other CSI as well (e.g. Diflubenzuron, lufenuron). Transovarial activity has been reported with novaluron treatment on adult insects for a small number of different insect species. For example, Trostanetsky et al., reports transovarial activity in *tribolium castaneum* (Coleoptera: Tenebrionidae) when given novaluron treated flour ((2008) Phytoparasitica Vol. 36(1), pp. 38-41). Gökçe et al. published that codling moth *Cydia Pomonella* (Lepidoptera: Tortricidae) suffer from reduced egg viability following adult exposure to novaluron at high rates of **145 g AI ha⁻¹** (Pest Manag Sci 2009, Vol. 65, pp. 283-287). Alyokhin et al. also reported in Pest Manag Sci 2008, Vol. 64, pp. 94-99, reduced viability of Colorado potato beetle eggs, when adults had been feeding on novaluron-treated potato leaves, also at high rates of **87 g AI ha⁻¹.** This effect was reported to reverse after just 48-96 hours of feeding on untreated leaves. According to Cutler et al. (Pest Manag Sci 2005, Vol. 61, pp. 1060-1068), lower rates e.g. 25 g AI ha⁻¹, is insufficient to economically stop egg hatching in Colorado potato beetle, due to degradation and insufficient levels of novaluron in the adult guts, thus not able to cause transovarial activity after ingestion by adults (p. 1067). Cutler et al. hence recommends high rates of at least **75 g AI ha⁻¹** on adult Colorado potato beetle. Even higher rates were reported by Wise et al. (Pest Manag Sci 2007, Vol. 63, pp. 737-742) for vertical transmission from adults to eggs in *Conotrachelus nenuphar* (Coleoptera:Curculionidae) i.e. **224 g AI ha⁻¹.** Thus, from the literature it does not appear that novaluron would be a suitable sublethal insecticide for low rate applications on other adult insects.

However, surprisingly, the opposite has been observed with *Diabrotica,* a widespread genus of beetle, which includes the cucumber beetle and corn rootworm. Members of this genus include several destructive agricultural pest species. The larvae of several *Diabrotica* species feed on, and tunnel inside, the root system of their host plants. The damage caused reduces the amount of food available to the plant for growth, consequently lowering the yield. Older plants are weakened, fall down easily and may die. *Diabrotica,* in particular the corn rootworm, are one of the most economically destructive insects of maize in the United States. The Western corn rootworm, *Diabrotica virgifera virgifera,* the Northern corn rootworm, *Diabrotica barberi,* and the Southern corn rootworm *Diabrotica undecimpunctata howardi* are the most devastating rootworm species. In addition, the *Diabrotica virgirfera virgifera,* the corn rootworm found predominantly in the US, is growing in resistance against the Cry3Bb1 trait present in the currently most widespread genetically modified corn. Furthermore, *Cucumber mosaic virus* and *Erwinia stewartii* (bacterial wilt of maize) can be spread by several *Diabrotica* species, both as larvae and as adults.

The problem of this pest is growing rapidly. *Diabrotica* species are capable of spreading widely and relatively quickly because the adults are strong fliers, reportedly able to travel 500 miles in 3-4 days. For example, in the 1990s the western corn rootworm subspecies *Diabrotica virgifera virgifera* LeConte was introduced into Serbia and has subsequently spread into many parts of Europe.

Additional arsenal is thus needed to combat *Diabrotica* effectively. However, an active ingredient is needed which can be used at low rates on a field crop in order to reduce risks of residues, environmental contamination, and intoxications. Using novaluron together with other active ingredients to also obtain immediate effects on adult Diabrotica is also needed.

Up until now, novaluron has not been used on *adult insects* of the *Diabrotica* genus, the assumption being that far too high rates would probably be needed as mentioned in the literature. It has now been found by the Applicant that novaluron's sublethal effects on adult insects works surprisingly better on *Diabrotica* than on the above-mentioned species. Novaluron on *Diabrotica* significantly reduces egg viability i.e. reduces egg hatch, and this at surprising low rates with long persistence. Rates as low as 50, 40, even 25 g AI ha⁻¹ can be used to suppress larval damage in future generations below the economic threshold. Indeed, novaluron has in fact surprisingly very strong transovarial activity in adult *Diabrotica,* which persists with time despite the use of low rates. This is particulary useful against *Diabrotica virgifera* (western corn rootworm) on maize.

With the looming threat of beetle resistance against neonicotinoid insecticides and *Diabrotica Virgifera's* increasing resistance against the Cry3Bb1 toxin in genetically modified corn, novaluron provides a valuable addition to the *Diabrotica* control arsenal. Other benefits of using this compound are its low mammalian toxicity and high residual activity. Finally, since novaluron has translaminar activity and lacks any systemic activity, any residues in the obtained crop, particularly important in maize crop, can be expected to be very low.

As mentioned above, other IGRs also have transovarial activity. Victor et al. (J Econ Entomol, Vol 92(2), pp. 303-308 (1999) concluded that lufenuron had the highest sterilant activity on eggs. However, results shown below demonstrate that despite having very similar translaminar activities at similar rates (also reflected in the respective labels of novaluron and lufenuron), surprisingly novaluron shows far higher transovarial activity than lufenuron in *Diabrotica.* Indeed, field trial reports of novaluron applied in the conventional manner as an ovicide/larvicide compared with lufenuron showed very similar activities. It was expected that since translaminar activities were similar, novaluron and lufenuron would have equally efficient transovarial activity. However contrary to all expectations, novaluron has a far more potent and more persistant effects on egg hatch than any other IGR tested on adult *Diabrotica.*

### Summary of the invention

The invention thus covers a method of combating insects of the genus of *Diabrotica* on crop plants, characterized in that novaluron is applied to the crop plants when the target *Diabrotica* insects reach adulthood.

Preferably, novaluron is first applied prior to the onset of ovipositing.

Novaluron has surprisingly powerful transovarial effects in all species of the Diabrotica genus. More preferably, Novaluron is applied to crop plants in order to combat/control insects of one or more of the species of *Diabrotica virgifera, Diabrotica barberi, Diabrotica balteata and Diabrotica undecimpunctata.*

The advatange of this method is that novaluron can be applied preferably at a rate of less than 60 g AI ha⁻¹.

Advantageously, the crop plants are selected from maize, soybean, wheat and vegetable plants such as beans.

The invention also covers the use of novaluron with feeding stimulants e.g. Cucurbitacin, which provide a feeding stimulation thus increasing uptake of novaluron.

The benefits of the application of novaluron will be expressed as reductions in surviving egg stages in the following generation and season.

### Detailed description of the invention

The present invention makes use of the unexpected finding that novaluron is effective at combating/controlling insects of the genus *Diabrotica* and thus addresses the problems mentioned above and also provides an alternative method of controlling these insects. This can be useful in a program using several modes of action against the insect.

By the terms "combat" or "combating" / "control" or "controlling" the insects it is meant that, the insect population is reduced. In this case, the reduction in insect population is achieved mainly through indirect sublethal, transovarial activity, but also via direct lethal ovicidal and larvicidal activity. Thus the method of the invention may involve the use of an amount of the active ingredient that is sufficient to cause transovarial activity in the adult insects (i.e a transovarially effective amount of active ingredient, i.e. an amount sufficient to reduce egg hatching). The effect is observed on the next generation of *Diabrotica* in the following season when egg hatch occurs, normally the following spring.

By virtue of the surprising ability of novaluron to control *Diabrotica* insects the invention also provides a method of protecting crop plants, wherein said plants are susceptible to and/or under attack from such insects.

### Timing of the Application

The present invention provides a method of combating or controlling insects of the genus of *Diabrotica* on crop plants, characterized in that novaluron is applied to the crop plants when the target *Diabrotica* insects reach adulthood.

This means that novaluron can be applied to the crop plants once the target Diabrotica insects start emerging from the pupal stage as adults.

The detection of adult emergence can be carried out by simple regular visual inspection of the field of crop plants during the relevant period or by setting up sticky traps in various locations in the field, which trap the flying adults. As soon as adults are detected, novaluron can start to be applied to the crop plants for the first time. Preferably novaluron is first applied prior to the onset of ovipositing.

Novaluron can be applied more than once during the adult stage of the target Diabrotica insect population. Generally, at a rate of 50 g AI ha⁻¹, the interval between applications will preferably be around 21 days. At lower rates, the interval will shorten.

The result is that egg hatch is reduced, thereby significantly reducing the population in the next generation of the *Diabrotica* insect.

### Formulation and rates

Novaluron can be used in its free form or in an agrochemically acceptable salt form.

Novaluron can be applied as any type of formulation, for instance, emulsifiable concentrate (EC), water dispersible granule (WG), ultra low volume (ULV) concentrates, wettable powders (WP), dry flowables (DF), soluble (liquid) concentrates (SL), soluble powders(SP), suspension concentrates (SC), capsule suspensions (CS), granules (G), dusts (D).

In a particular embodiment, novaluron is applied as the commercially available emulsifiable concentrate or water dispersible granules e.g. Diamond^{®} 0.83EC available from Makhteshim-Agan^{®} of North America or Rimon^{®} 10EC, 0.83EC or MCW 275 available from Chemtura Corporation^{®} or Makhtehsim Agan Industries^{®}.

Preferably, novaluron is applied to the crop plants as a foliar application, for instance as a spray. The spray may be by ground or aerial and preferably should cover the plants over areas large enough to prevent migration of adults which have not ingested novaluron treated plant material. Preferably, large scale areas, larger than 10 acres (larger than 4 ha), should be treated to obtain the full transovarial effect of novaluron in order to ensure that adult migrants are also treated and laid eggs that will not hatch.

The advantage of the method according to the invention is that novaluron can be applied preferably at a rate of less than 60 g AI ha⁻¹, more preferably less than 50 g AI ha⁻¹, even more preferably less than 40 g AI ha⁻¹, most preferably less than 30 g AI ha⁻¹. This means the crop is subjected to far less active ingredient, thereby reducing possible residues and risk of environmental contamination and intoxications. Preferably, the rate used is at least 5 g AI ha⁻¹, preferably at least 10 g AI ha⁻¹, more preferably at least 20 g AI ha⁻¹. In all instances herein, "AI" means "active ingredient").

### Combinations

Novaluron can be applied together in an IPM program with other known pesticides i.e. herbicides, fungicides, insecticides. Combinations with fast acting insecticides having a knock-down effect are particularly useful, for example a composition comprising both novaluron and bifenthrin (sold as Rimon Fast^{®} by Makhteshim Agan).

Other compositions include novaluron comprising other pyrethroids besides bifenthrin e.g. lambda-cyhalothrin, gamma-cyhalothrin and tefluthrin.

In order to increase feeding of the pests of treated plant material, a feeding stimulant e.g. cucurbitacin can be applied to the crop plants **prior to or simultaneously** with the application of novaluron, in order to encourage the adult insects to feed on more of the treated plant.

### Target species: Diabrotica

Novaluron is preferably applied to crop plants in order to combat/control insects of one or more of the species of *Diabrotica virgifera, Diabrotica barberi, Diabrotica balteata, Diabrotica undecimpunctata, Diabrotica beniensis, Diabrotica cristata, Diabrotica curvipustulata, Diabrotica dissimilis, Diabrotica elegantula, Diabrotica emorsitans, Diabrotica graminea,Diabrotica hispanolae, Diabrotica lemniscata, Diabrotica linsleyi, Diabrotica ongicornis, Diabrotica milleri, Diabrotica nummularis, Diabrotica occlusa, Diabrotica porracea, Diabrotica cutellata, Diabrotica speciosa, Diabrotica tibialis, Diabrotica trifasciata, Diabrotica significata and Diabrotica viridula.*

Novaluron is more preferably applied to crop plants in order to combat/control insects of one or more of the subspecies of *Diabrotica virgifera (e.g. Diabrotica virgifera virgifera* LeConte and *Diabrotica virgifera zeae), Diabrotica barberi (e.g. Diabrotica barberi* Smith and Lawrence), *Diabrotica undecimpunctata (e.g. Diabrotica undecimpunctata howardi, Diabrotica undecimpunctata tenella, Diabrotica undecimpunctata, undecimpunctata) and Diabrotica balteata (Diabrotica balteata* LeConte).

According to the present invention, novaluron is thus applied on the crop plants infested with *Diabrotica* when insects reach adulthood. For example, for *Diabrotica virgifera* and *Diabrotica barberi* this is generally from July to September, depending on weather conditions. More preferably, novaluron is applied to crops infested with *Diabrotica virgifera* and *Diabrotica barberi* from mid-July to mid-August.

Eggs, larvae, and pupae of the *Diabrotica undecimpunctata* i.e. the Southern Corn Rootworm are similar in appearance to the corresponding stages of Northern Corn Rootworm and Western Corn Rootworm. However, this species overwinters as an adult, instead of in the egg stage like the Northern Corn Rootworm and Western Corn Rootworm. Novaluron can thus be applied to *Diabrotica undecimpunctata* also later in the season, even into the month of September.

### Applicable crop plants

The crop plant according to this invention is any non-animal species or variety that is grown to be harvested as food, livestock fodder, fuel or for any other economic purpose. The crop plants which are treated for *Diabrotica* control are preferably selected from corn (maize), cucurbits (for example cucumbers, melons, pumpkins, squashes, and gourds), potato, sweet potato, wheat, barley, oats, rye, tomato, vegetables such as beet, beans, okra, lettuce, onion, cabbages, peas, and aubergine, but also cotton, oilseed rape, soyabean, pepper, sunflower, and chrysanthemum and ornamentals.

More preferably, the crop plant to which novaluron is applied in order to combat/control *Diabrotica* is selected from maize, cotton, curcurbits, soybean, wheat and vegetable plants such as bean plants. Even more preferably, the crop plant is selected from maize, soybean or cotton. Most preferably the crop plant is selected from maize.

Hence, in the most preferred embodiment, the invention covers a method of combating *Diabrotica virgifera* and/or *Diabrotica virgifera* and/or *Diabrotica undecimpunctata* on crop plants of maize, characterized in that novaluron is applied to the crop plants of maize when the target *Diabrotica virgifera* and/or *Diabrotica barberi* and/or *Diabrotica undecimpunctata* insects reach adulthood. The invention also covers a method of protecting crop plants of maize, wherein said plants are susceptible to and/or under attack from *Diabrotica virgifera* and/or *Diabrotica barberi* and/or *Diabrotica undecimpunctata.*

The term "crop plants" is to be understood as also including any crops that have been rendered tolerant to herbicides like bromoxynil or classes of herbicides (such as, for example, HPPD inhibitors, ALS inhibitors, for example primisulfuron, prosulfuron and trifloxysulfuron, EPSPS (5-enol-pyrovyl-shikimate-3-phosphate-synthase) inhibitors, GS (glutamine synthetase) inhibitors) as a result of conventional methods of breeding or genetic engineering. An example of a crop that has been rendered tolerant to imidazolinones, e.g. imazamox, by conventional methods of breeding (mutagenesis) is Clearfield^{®} summer rape (Canola). Examples of crops that have been rendered tolerant to herbicides or classes of herbicides by genetic engineering methods include glyphosate- and glufosinate-resistant maize varieties commercially available under the trade names RoundupReady^{®} and LibertyLink^{®}.

The term "crop plants" is also to be understood as including also crop plants which have been so transformed by the use of recombinant DNA techniques that they are capable of synthesising one or more selectively acting toxins, such as are known, for example, from toxin-producing bacteria, especially those of the genus Bacillus.

Toxins that can be expressed by such transgenic plants include, for example, insecticidal proteins, for example insecticidal proteins from Bacillus cereus or Bacillus popilliae; or insecticidal proteins from Bacillus thuringiensis, such as δ-endotoxins, e.g. Cry1A(b), Cry1A(c), Cry1F, Cry1F(a2), Cry2A(b), Cry3A, Cry3B(b1) or Cry9C, or vegetative insecticidal proteins (Vip), e.g. Vip1, Vip2, Vip3 or Vip3A; or insecticidal proteins of bacteria colonising nematodes, for example Photorhabdus spp. or Xenorhabdus spp., such as Photorhabdus luminescens, Xenorhabdus nematophilus; toxins produced by animals, such as scorpion toxins, arachnid toxins, wasp toxins and other insect-specific neurotoxins; toxins produced by fungi, such as Streptomycetes toxins, plant lectins, such as pea lectins, barley lectins or snowdrop lectins; agglutinins; proteinase inhibitors, such as trypsin inhibitors, serine protease inhibitors, patatin, cystatin, papain inhibitors; ribosome-inactivating proteins (RIP), such as ricin, maize-RIP, abrin, luffin, saporin or bryodin; steroid metabolism enzymes, such as 3-hydroxysteroidoxidase, ecdysteroid-UDP-glycosyl-transferase, cholesterol oxidases, ecdysone inhibitors, HMG-COA-reductase, ion channel blockers, such as blockers of sodium or calcium channels, juvenile hormone esterase, diuretic hormone receptors, stilbene synthase, bibenzyl synthase, chitinases and glucanases.

In the context of the present invention there are to be understood by δ-endotoxins, for example Cry1A(b), Cry1A(c), Cry1F, Cry1F(a2), Cry2A(b), Cry3A, Cry3B(b1) or Cry9C, or vegetative insecticidal proteins (Vip), for example Vip1, Vip2, Vip3 or Vip3A, expressly also hybrid toxins, truncated toxins and modified toxins. Hybrid toxins are produced recombinantly by a new combination of different domains of those proteins (see, for example, WO 02/15701). An example for a truncated toxin is a truncated Cry1A(b), which is expressed in the Bt11 maize from Syngenta Seed SAS, as described below. In the case of modified toxins, one or more amino acids of the naturally occurring toxin are replaced. In such amino acid replacements, preferably non-naturally present protease recognition sequences are inserted into the toxin, such as, for example, in the case of Cry3A055, a cathepsin-G-recognition sequence is inserted into a Cry3A toxin (see WO 03/018810).

Examples of such toxins or transgenic plants capable of synthesising such toxins are disclosed, for example, in EP-A-0 374 753, WO 93/07278, WO 95/34656, EP-A-0 427 529, EP-A-451 878 and WO 03/052073.

The processes for the preparation of such transgenic plants are generally known to the person skilled in the art and are described, for example, in the publications mentioned above. CryI-type deoxyribonucleic acids and their preparation are known, for example, from WO 95/34656, EP-A-0 367 474, EP-A-0 401 979 and WO 90/13651.

The toxin contained in the transgenic plants imparts to the plants tolerance to harmful insects. Such insects can occur in any taxonomic group of insects, but are especially commonly found in the beetles (Coleoptera), two-winged insects (Diptera) and butterflies (Lepidoptera).

Transgenic plants containing one or more genes that code for an insecticidal resistance and express one or more toxins are known and some of them are commercially available. Examples of such plants are: YieldGard® (maize variety that expresses a Cry1A(b) toxin); YieldGard Rootworm® (maize variety that expresses a Cry3B(b1) toxin); YieldGard Plus® (maize variety that expresses a Cry1A(b) and a Cry3B(b1) toxin); Starlink® (maize variety that expresses a Cry9(c) toxin); Herculex I® (maize variety that expresses a Cry1F(a2) toxin and the enzyme phosphinothricine N-acetyltransferase (PAT) to achieve tolerance to the herbicide glufosinate ammonium); NuCOTN 33B® (cotton variety that expresses a Cry1A(c) toxin); Bollgard I® (cotton variety that expresses a Cry1A(c) toxin); Bollgard II^{®} (cotton variety that expresses a Cry1A(c) and a Cry2A(b) toxin); VipCOT® (cotton variety that expresses a Vip3A and a Cry1Ab toxin); NewLeaf® (potato variety that expresses a Cry3A toxin); NatureGard® and Protecta®.

Further examples of such transgenic crops are:
1. Bt11 Maize from Syngenta Seeds SAS, Chemin de I'Hobit 27, F-31 790 St. Sauveur, France, registration number C/FR/96/05/10. Genetically modified Zea mays which has been rendered resistant to attack by the European corn borer (Ostrinia nubilalis and Sesamia nonagrioides) by transgenic expression of a truncated Cry1A(b) toxin. Bt11 maize also transgenically expresses the enzyme PAT to achieve tolerance to the herbicide glufosinate ammonium.
2. Bt176 Maize from Syngenta Seeds SAS, Chemin de I'Hobit 27, F-31 790 St. Sauveur, France, registration number C/FR/96/05/10. Genetically modified Zea mays which has been rendered resistant to attack by the European corn borer (Ostrinia nubilalis and Sesamia nonagrioides) by transgenic expression of a Cry1A(b) toxin. Bt176 maize also transgenically expresses the enzyme PAT to achieve tolerance to the herbicide glufosinate ammonium.
3. MIR604 Maize from Syngenta Seeds SAS, Chemin de I'Hobit 27, F-31 790 St. Sauveur, France, registration number C/FR/96/05/10. Maize which has been rendered insect-resistant by transgenic expression of a modified Cry3A toxin. This toxin is Cry3A055 modified by insertion of a cathepsin-G-protease recognition sequence. The preparation of such transgenic maize plants is described in WO 03/018810.
4. MON 863 Maize from Monsanto Europe S.A. 270-272 Avenue de Tervuren, B-1150 Brussels, Belgium, registration number C/DE/02/9. MON 863 expresses a Cry3B(b1) toxin and has resistance to certain Coleoptera insects.
5. IPC 531 Cotton from Monsanto Europe S.A. 270-272 Avenue de Tervuren, B-1150 Brussels, Belgium, registration number C/ES/96/02.
6. 1507 Maize from Pioneer Overseas Corporation, Avenue Tedesco, 7 B-1160 Brussels, Belgium, registration number C/NL/00/10. Genetically modified maize for the expression of the protein Cry1F for achieving resistance to certain Lepidoptera insects and of the PAT protein for achieving tolerance to the herbicide glufosinate ammonium.
7. NK603 x MON 810 Maize from Monsanto Europe S.A. 270-272 Avenue de Tervuren, B-1150 Brussels, Belgium, registration number C/GB/02/M3/03. Consists of conventionally bred hybrid maize varieties by crossing the genetically modified varieties NK603 and MON 810. NK603 x MON 810 Maize transgenically expresses the protein CP4 EPSPS, obtained from Agrobacterium sp. strain CP4, which imparts tolerance to the herbicide Roundup^{®} (contains glyphosate), and also a Cry1A(b) toxin obtained from *Bacillus thuringiensis subsp. kurstaki* which brings about tolerance to certain Lepidoptera, include the European corn borer.

Transgenic crops of insect-resistant plants are also described in BATS (Zentrum für Biosicherheit und Nachhaltigkeit, Zentrum BATS, Clarastrasse 13, 4058 Basel, Switzerland) Report 2003.

In a particular embodiment, novaluron is applied to genetically modified Maize containing MON 863 of Monsanto expressing the Cry3B(b1) toxin or MIR604 containing plants of Syngenta expressing the mCry3A toxin. In another embodiment, novaluron can be applied to any other genetically modified maize plant producing a toxin that is no longer effective against *Diabrotica.*

The term "crop plants" is to be understood as also including crop plants which have been so transformed by the use of recombinant DNA techniques that they are capable of synthesising antipathogenic substances having a selective action, such as, for example, the so-called "pathogenesis-related proteins" (PRPs, see e.g. EP-A-0 392 225). Examples of such antipathogenic substances and transgenic plants capable of synthesising such antipathogenic substances are known, for example, from EP-A-0 392 225, WO 95/33818, and EP-A-0 353 191. The methods of producing such transgenic plants are generally known to the person skilled in the art and are described, for example, in the publications mentioned above.

Antipathogenic substances which can be expressed by such transgenic plants include, for example, ion channel blockers, such as blockers for sodium and calcium channels, for example the viral KP1, KP4 or KP6 toxins; stilbene synthases; bibenzyl synthases; chitinases; glucanases; the so-called "pathogenesis-related proteins" (PRPs; see e.g. EP-A-0 392 225); antipathogenic substances produced by microorganisms, for example peptide antibiotics or heterocyclic antibiotics (see e.g. WO 95/33818) or protein or polypeptide factors involved in plant pathogen defence (so-called "plant disease resistance genes", as described in WO 03/000906).

Crops may also be modified for enhanced resistance to fungal (for example Fusarium, Anthracnose, or Phytophthora), bacterial (for example Pseudomonas) or viral (for example potato leafroll virus, tomato spotted wilt virus, cucumber mosaic virus) pathogens.

Crops also include those that have enhanced resistance to nematodes, such as the soybean cyst nematode.

The following examples illustrate the invention, but by no means intend to limit the scope of the claims.

### EXAMPLES

### EXAMPLE 1

The following IGRs in Table 1 were tested for their transovarial effects on *Diabrotica balteata* by observing percentage egg mortality.

**Table 1**

| **Compounds** | **Commercial Name** | **Formulation** | **Rates in g Al / ha** |
|---|---|---|---|
| Lufenuron | Match | EC 050 | 25, 12.5, 5 |
| Flufenoxuron | Cascade | EC 100 | 25, 12.5, 5 |
| Hexaflumuron | Consult | EC 100 | 25, 12.5, 5 |
| Novaluron | Rimon | EC 100 | 25, 12.5, 5 |
| Diflubenzuron | Dimilin | SC 480 | 25, 12.5, 5 |
| Teflubenzuron | Nomolt | EC 150 | 25, 12.5, 5 |
| Methoxyfenozide | Intrepid | SC 240 | 25, 12.5, 5 |
| Tebufenozide | Mimic | SC 230 | 25, 12.5, 5 |

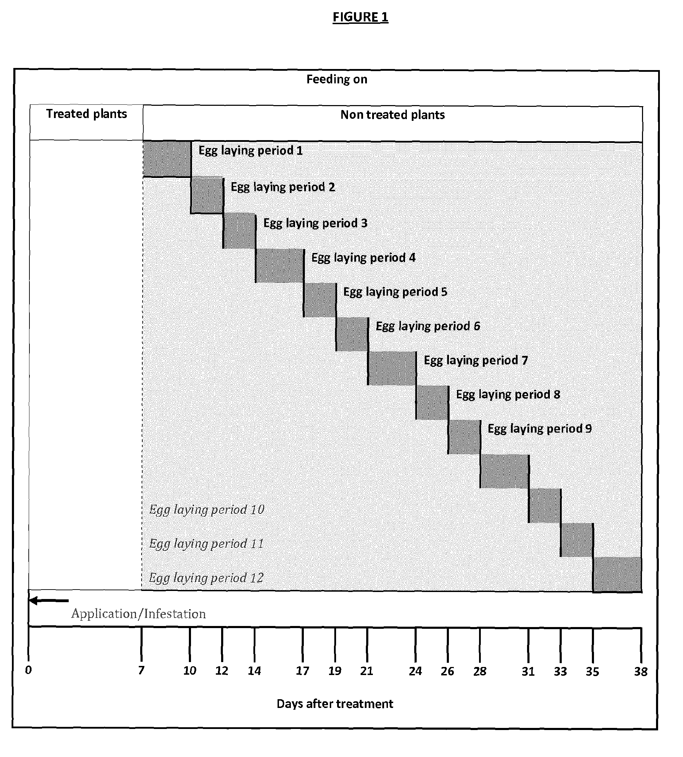

Bean plants (*Phaseolus vulgaris,* var. Amata) were treated in an automatic spray chamber (ARO-1) with around 500 l/ha. After drying of the spray deposits, plants were placed in gauze cages and infested with newly hatched (0-24h old) *Diabrotica balteata* adults. After seven days, treated plants were removed and replaced by non-treated plants. From day seven to day 38 eggs were collected in three-day intervals, counted and checked on number of hatched larvae (% egg mortality). The feeding program and the egg laying periods are shown in Figure 1. Results of the percentage of egg mortality (non-hatched eggs) are shown in Table 2 below. Percentage egg mortality was calculated as the number of unhatched eggs per total number of eggs laid.

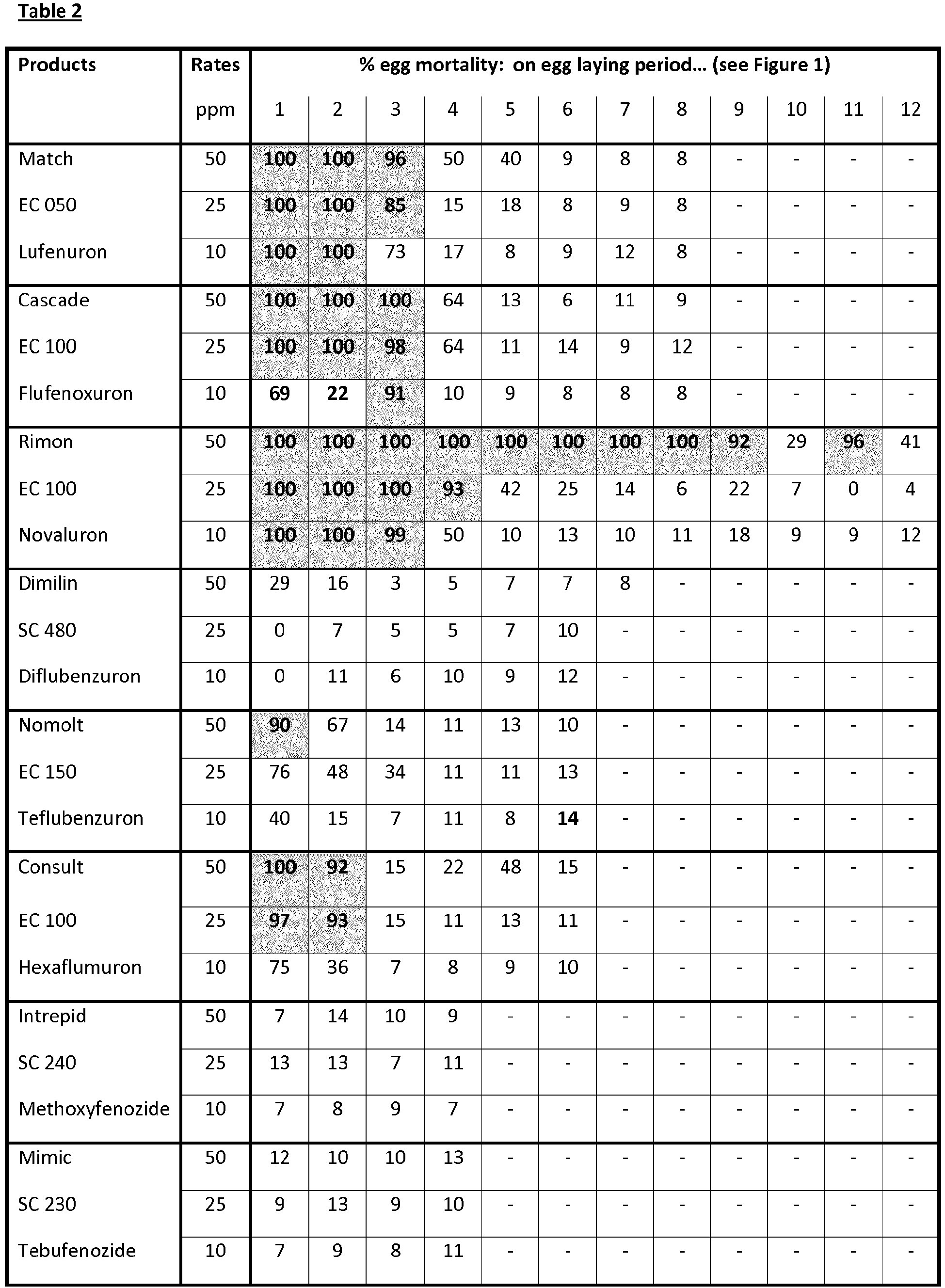

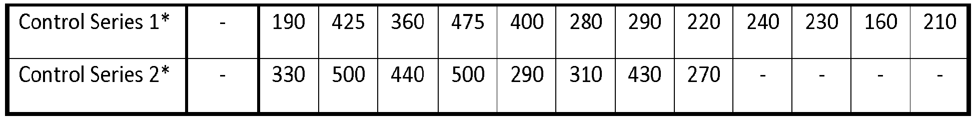

Transovarial effects can be observed on Match, Cascade, Rimon, Nomolt and Consult treated adults of *Diabrotica balteata.* Dimilin, Intrepid and Mimic are transovarially inactive at the used dose rates. Rimon^{®} (novaluron) ranked as by far the best compound for transovarial activity on *Diabrotica balteata,* also having the longest effect over time.

The total number of sterilised (unhatched) eggs, considered over the whole test period for Rimon^{®} (novaluron), were:

| | | |
|---|---|---|
| **25 g Al ha⁻¹ ≈90%** | 12.5 g AI ha⁻¹ ≈25% | 5 g AI ha⁻¹ ~25% |

However for Match ^{®} (lufenuron), the egg mortality was much lower. Applications with Match^{®} on Diabrotica do not represent an economically feasible method for significantly reducing future insect populations:

| | | |
|---|---|---|
| 25g Al ha⁻¹ ≈25% | 12.5 g Al ha⁻¹ ≈25% | 5 g Al ha⁻¹ ≈20% |

Thus, only a treatmeant of 25 g AI ha⁻¹ with novaluron is sufficient to suppress damage of corn root worm larvae below the economic threshold with a single application.

To control Diabrotica attacks with transovarial acting insecticides, multiple applications are necessary, because the action is reversible after a certain period of time (eggs become viable again). The spray interval depends on the application rate.

According to the observations in the present experiment, the following conclusions were made for Novaluron:

**Table 3**

| **Compound** | **Rate (g AI/ha)** | **Spray interval (days)** |
|---|---|---|
| Rimon EC 100 | 25 | 21 |
| | 12.5 | 10 |
| | 5 | 7 |

By contrast, Match^{®} (lufenuron) and Cascade^{®} (Flufenoxuron) would require more frequent spraying if used at the same rates for its transovarial activity, thereby increasing residues and the risk of environmental contamination and intoxications. Nomolt^{®} and Consult^{®} don't show economically feasible intervals for spraying (every 3 to 5 days):

**Table 4**

| **Compound** | **Rate (g AI/ha)** | **Spray interval (days)** |
|---|---|---|
| Match EC 050 | 25 | **7** |
| Lufenuron | 12.5 | 7 |
| | 5 | 5 |
| Cascade EC 100 | 25 | 7 |
| Flufenoxuron | 12.5 | 7 |
| | 5 | 7 |
| Consult EC 100 | 25 | 5 |
| Hexaflumuron | 12.5 | 5 |
| | 5 | Insufficient |
| Nomolt EC 150 | 25 | 3 |
| Teflubenzuron | 12.5 | Insufficient |
| | 5 | Insufficient |

Without being bound by theory, the enhanced performance of Novaluron might be attributed to an unusual and unexpectedly good absorption of the active ingredient through the gut and tissues of *Diabrotica* leading to outstanding transovarial effects and long term egg hatch inhibition, resulting in up to 21 days of effect after a single foliar treatment of 50 g AI /ha during adult feeding on the crop plant.

The benefit of the strong transovarial effect will not be observed on small plots. This can only be observed on large scale plots in the form of reduction of egg hatch in the following season. Such benefits can only be effectively demonstrated on large scale due to migration of adult insects and the elapse of time between treatment and effect (>6 months).

### EXAMPLE 2

The above results were highly surprising for the Applicant, because regarding translaminar and feeding/contact activity both Match and Rimon are highly similar when applied to eggs or larval instars.

For example on both *Spodoptera frugiperda* and *Plutella xylostella* similar activities were obtained for the same rates:

**Table 5**

| **Crop** | **Pest/Stage** | **Lufenuron (Match^{®})** | **Novaluron (Rimon^{®})** |
|---|---|---|---|
| Cotton | *Spodoptera* | LC50 = 1 ppm 4DAT (days after treatment)* | LC50 = 1.1 ppm 4DAT (days after treatment)* |
| | *frugiperda* | | |

| | | | |
|---|---|---|---|
| *Spray application: Foliar application of plants in a spray chamber was stopped just before run off (100 ml). Spray deposits were air-dried and 2 leaves transferred to Petri dishes (14 cm diam.) onto wet filter paper and infested with 10 S. ***frugiperda* larvae.** Petri dishes were covered with cotton round filters and closed with tight fitting plastic lids. They were kept in a plant growth chamber (26° C, 12 h day/12 h night cycles). Mortality rates in 3 replicate dishes were assessed 4 DAT. | | | |

This similarity in activity as a direct ovicide/larvicide is also reflected in the current labels of Match^{®} and Rimon^{®} recommending similar rates in their application against pests, in some instances actually showing higher dose rates for Rimon^{®} than for Match^{®}.

## Claims

1. A method of combating or controlling insects of the genus of *Diabrotica* on crop plants, **characterized in that** novaluron is applied to the crop plants when the targeted Diabrotica insects reach adulthood.

2. The method according to claim 1, wherein novaluron is first applied prior to the onset of ovipositing.

3. The method according to claim 1 or 2, wherein novaluron is applied more than once during the targeted *Diabrotica* insects' adulthood.

4. The method according to any one of the preceding claims, wherein novaluron is applied in order to combat insects of one or more of the species selected from *Diabrotica virgifera, Diabrotica barberi, Diabrotica balteata, Diabrotica beniensis, Diabrotica cristata, Diabrotica curvipustulata, Diabrotica dissimilis, Diabrotica elegantula, Diabrotica emorsitans, Diabrotica graminea,Diabrotica hispanolae, Diabrotica lemniscata, Diabrotica linsleyi, Diabrotica, ongicornis, Diabrotica milleri, Diabrotica nummularis, Diabrotica occlusa, Diabrotica porracea, Diabrotica cutellata, Diabrotica speciosa, Diabrotica tibialis, Diabrotica trifasciata, Diabrotica undecimpunctata, and Diabrotica viridula.*

5. The method according to claim 4, wherein novaluron is applied in order to combat insects of one or more of the subspecies of *Diabrotica virgifera, Diabrotica barberi and Diabrotica undecimpunctata.*

6. The method according to any one of the preceding claims wherein novaluron is applied at a rate of less than 60 g AI ha⁻¹.

7. The method according to claim 6 wherein novaluron is applied at a rate of less than 50 g AI ha⁻¹.

8. The method according to claim 7 wherein novaluron is applied at a rate of less than 40 g AI ha⁻¹.

9. The method according to claim 8 wherein novaluron is applied at a rate of less than 30 g AI ha⁻¹.

10. The method according to any one of the preceding claims wherein novaluron is applied to crop plants selected from maize, cotton, or soyabean.

11. The method according to any one of the preceding claims wherein a feeding stimulant is applied to the crop plants prior to or simultaneously with the application of novaluron.

12. The method according to any one of the preceding claims wherein novaluron is applied to the crop plants to cover a treated area larger than 10 acres (4 ha).
